# EUROPEAN PATENT SPECIFICATION

(11) **EP 1 567 607 B1**
(45) Date of publication and mention of the grant of the patent: **17.02.2010**
(21) Application number: 03776655.7
(22) Date of filing: 05.12.2003
(51) Int. Cl.: C09J 11/06, C09J 161/10, B27K 3/34

(54) **GLUE LINE USE OF BIFENTHRIN IN WOOD PRODUCTS**
VERWENDUNG VON BIFENTHRIN ALS KLEBENAHT BEI HOLZPRODUKTEN
UTILISATION DE JOINT DE COLLE CONTENANT DE LA BIFENTHRINE DANS DES PRODUITS EN BOIS

(30) Priority: 05.12.2002 AU 2002953115
(43) Date of publication of application: 31.08.2005
(73) Proprietor: FMC Australasia Pty Ltd, Murrarie, QLD 4172 (AU); Osmose (Australia) Pty Ltd, Botany, Mascot NSW 1460 (AU)
(72) Inventor: ROMERO AMAYA, Francisco Javier, Peachtree City Georgia 20269 (US); Watson, Kim Gary, (AU)
(74) Representative: Schindele, Claus
(86) International application number: PCT/AU2003/001620
(87) International publication number: WO 2004/050783

(56) References cited:
- EP-A- 1 018 413
- WO-A-98/18328
- AU-A- 2 393 497
- PATENT ABSTRACTS OF JAPAN & JP 08 039 511 A (SUMITOMO CHEM. CO. LTD. ET AL.) 13 February 1996
- DATABASE WPI Week 199115, Derwent Publications Ltd., London, GB; Class A81, AN 1991-105684, XP003012275 & JP 03 047 102 A (TAKEDA CHEMICAL IND. KK.) 28 February 1991
- DATABASE WPI Week 200132, Derwent Publications Ltd., London, GB; Class A93, AN 2001-303488, XP003012276 & JP 2001 002514 A (HOKUSHIN CORP.) 09 January 2001

## Description

### FIELD OF THE INVENTION

The invention pertains to wood and wood preservation and more particularly the treatment of wood, wood composites, veneer based products and engineered wood products during manufacture to protect against attack from wood destroying organisms (eg. termites, beetles and borers). The active ingredient is applied via addition to the resin or glue system and results in treatment of the wood based product through a glue line treatment. Glue line treatments may be used as a stand alone method or used in conjunction with surface treatments of wood and engineered wood products using bifenthrin or other synthetic pyrethroids and/or active chemicals.

This invention also pertains to all products treated by these processes and active chemicals.

### BACKGROUND OF THE INVENTION

Bifenthrin is a synthetic pyrethroid insecticide/acaracide that is classified as a non-cyano pyrethroid. The active ingredient is efficacious to target pests through both contact and stomach action. As with most synthetic pyrethroids bifenthrin is active against a wide range of pests including Coleoptera, Diptera, Heteroptera, Hymenoptera, Homoptera, Isoptera, Lepidoptera, Orthoptera as well as a number of species of Acarina. Bifenthrin is currently registered in a number of countries throughout the world for the control of a wide range of pests.

Bifenthrin is used extensively in both crop and non-crop markets including : but not limited to the cotton, small grains, vegetable, turf and ornamental, professional pest control, greenhouse, grain protection, home garden and mosquito control industries. However the art in this field does not Indicate that it was used in the timber preservation industry for the control of subterranean termites prior to this invention.

Tests have demonstrated that when using conventional treatment methods in the timber industry, very low rates of bifenthrin are required to protect timber against attack by termites (eg, ***Coptotermes spp, Mastotermes darwiniensis**,* & Reticulitermes spp). Application rates range from 1 to 20 g ac/m³ (grams of active ingredient) depending upon the target species.

Standard treatment methods in Australia and around the world currently require some penetration Into the timber by the preservative. This can be achieved by vacuum pressure, vacuum-vacuum systems that require a treatment vessel and expensive peripheral and computerized equipment. The process time required to treat the timber varies depending on the product but takes at least 45 minutes to treat wood. Penetration of preservatives can also be achieved by diffusion, a process which involves less expensive equipment but requires much more time and higher levels of stock holding. Wood moisture content is one of the most important parameters that control diffusion times. Wet wood is required to achieve diffusion within commercial expectancy. Full penetration of 90 mm thick radiata pine green sapwood can be achieved between 4 to 8 weeks.

The inclusion of preservatives and active chemicals in glues, for example in EP 1 018 413, during the manufacture of wood composites have been attempted on numerous occasions and even used by the industry over the years. The current list of products used In this manner has a number of shortcomings to meet all requirements of the industry, for example:
Arsenic trioxide is a highly toxic inorganic material that poses an exceptionally high risk in use. The product has been banned from use in the majority of western countries with limited use for specific niche applications. Zinc Borate is another inorganic compound that requires high loadings to be effective. It is only specific for particle-based composites and not veneer based wood products.

A number of organophosphate insecticides (Phoxim & Chlorpyrifos) were recently removed from the Australian Quarantine Inspection Services (AQIS) list. China and Japan have now banned the use of these products as wood preservatives for the control of termites. CSIRO studies have shown that Chlopryrifos treatments at rates specified by different standards fail to protect the products against termite attack.

Other synthetic pyrethroids eg., deltamethrin, lambda-cyhalothrin, permethrin have been found to be either too irritating or unstable under high pH conditions (approximately 90% of permethrin has shown to be not effective when used for veneer based products manufactured with phenol formaldehyde resins).

Before this invention the wood and wood composite industry did not have an effective option for an in-line treatment using preservatives or termiticides adding to the glue mix during manufacture of the products.

These disclosed processes of treating engineered wood products by adding bifenthrin in the glue line during the manufacture of plywood, LVL, OSB and flake boards has not been known to be used in Australia or in any other country.

Bifenthrin has been found to have specific properties that make it a candidate for this type of treatment. Bifenthrin is stable under conditions of high pH and elevated temperature, bonds strongly to organic materials (wood) and is significantly less water soluble than any other of the active ingredients used or attempted to be used in the past. Bifenthrin does not present any occupational health and safety problems and does not instigate pollutants when the treated product is burnt.

### OBJECTS AND SUMMARY OF THE INVENTION

Accordingly it is an object of the present invention to provide glue line resin systems incorporating bifenthrin and methods and apparatus for the use of such glue line resin systems with bifenthrin as well as wood or engineered wood products manufactured using those resin and glue systems.

In accordance with one object of the present invention, there is provided a glue for controlling pests that attack wood or wood products, the glue comprising: a resin; and bifenthrin, wherein the bifenthrin has a mean particle size of 1 to10 um.

In accordance with a further object of the present invention, there is provided a method for preserving a wood product comprising the steps of: using a glue to join wood subcomponents of the product; the glue including bifenthrin as an ingredient, wherein: the bifenthrin is contained in the glue as particles having a mean particle size of between 1 and 10 um, wherein the product is plywood and the subcomponents are veneers from which the plywood is constructed.

In accordance with yet another object of the present invention there is provided a wood product comprising: wood subcomponents which are joined with a glue; the glue containing bifenthrin, wherein the bifenthrin has a mean particle size of 1 to 10 um, wherein the product is plywood and the subcomponents are veneers from which the plywood is constructed.

### BEST MODE AND OTHER EMBODIMENTS OF THE INVENTION

Bifenthrin has been found also to be very effective when used as a glue line additive to protect engineered and reconstituted wood products against the attack of termites and other insects.

When using bifenthrin as an additive for Phenol Formaldehyde (PF) resins, about 25g ac/m³ and 100 g ac/m³ are required to protect the product against the attack of subterranean termites (*Coptotermes spp* and *Mastotermes darwiniensis* respectively). The quantifier "g ac/m³" refers to grams of active ingredient per cubic meter.

Studies conducted using the drum test as described by the Australasian Wood Preservation Council (AWPC) protocols used a 9-ply 2.5 mm thick veneer plywood treated with bifentrin as a glue line additive. Results confirm that low rates of 25 and 100 g ac/m³ of bifenthrin were sufficient to prevent subterranean termites (*Coptotermes acinaciformis* and *Mastotermes darwiniensis* respectively) from attacking the specimens. Tables 1 and 2 show these results.

**Table 1 .**

| Mean mass loss (%) of softwood plywood treated with bifenthrin as a glue line additive and exposed to subterranean termites (*Mastotermes darwiniensis*) | | | | |
|---|---|---|---|---|
| Treatment | Retention (g ac/m³) | Plywood construction | Mean mass loss (%) | Standard error (SE) |
| Untreated | 0 | 9 x 2.5 | 77.9 | 12.5 |
| Bifenthrin | 25 | 9 x 2.5 | 10.1 | 2.4 |
| Bifenthrin | 50 | 9 x 2.5 | 7.3 | 1.6 |
| Bifenthrin | 75 | 9 x 2.5 | 3.1 | 1.1 |
| Chlordane | 800 | 9 x 2.5 | 12.9 | 2.4 |
| Phoxim | 700 | 9 x 2.5 | 68.7 | 10.5 |

| | | | | |
|---|---|---|---|---|
| (Reference: CSIRO Contract Number FFP 00/290 Report Number 995) | | | | |

**Table 2**

| Mean mass loss (%) of softwood plywood treated with bifenthrin as a glue line additive and exposed to subterranean termites (*Coptotermes acinaciformis*) | | | | |
|---|---|---|---|---|
| Treatment | Retention (g ac/m3) | Plywood construction | Mean mass loss (%) | Standard error (SE) |
| Untreated | 0 | 9 x 2.5 | 89.4 | 3.0 |
| Bifenthrin | 25 | 9 x 2.5 | 1.9 | 1.0 |
| Bifenthrin | 50 | 9 x 2.5 | 0.5 | 0.4 |
| Bifenthrin | 75 | 9 x 2.5 | 0.7 | 0.2 |
| Chlordane | 800 | 9 x 2.5 | 1.4 | 0.4 |
| Phoxim | 700 | 9 x 2.5 | 29.6 | 9.0 |

| | | | | |
|---|---|---|---|---|
| (Reference: CSIRO Contract Number FFP 00/290 Report Number 995) | | | | |

Later studies were carried out to demonstrate that bifenthrin added to the glue line of engineered and reconstituted wood products was effective in preventing termite attack in products manufactured with s veneer up to 3.2 mm in depth. These studies were conducted in laboratory conditions in accordance with AWPC protocols. Results confirm that subterranean termites (*Coptotermes acinaciformis*) do not penetrate the glue line at any angle at rates of 25 g ac/m³. It also demonstrates that plywood manufactured using 2.5 mm veneer was effective in preventing attack from Mastotermes darwiniensis. (CSIRO Contract Number FFP 00/290 Report Number 995, CSIRO Contract Number FFP 01/273 Report Number 1137)

Other studies conducted by CSIRO also confirm that a combination of glue line additives and face treatment would stop subterranean termite (Mastotermes darwiniensis) attack at rates lower than 100 g ac /m³. The results show that 50 and 25 g ac/m³ addition of bifenthrin through the glue line and 20g ac/m³ addition in the face veneers provided control equivalent to a standalone glue line treatment applied at the rate of 100 g ac/m³. (CSIRO Contract Number FFP 02/337 Report Number 1301)

The repellent effect of bifenthrin as a Glue line additive is significantly influenced by particle size. This is particularly relevant when veneer based products are assembled with face veneers 3.2 mm or more in depth. Formulations that contain a mean particle size (of the active ingredient) of 0.1 um or less will require both a glue line treatment and face treatment to stop termites from attacking the engineered wood product. However, where the mean particle size is 1-10 um, surface treatment is not needed. To prove this concept CSIRO conducted testing in laboratory conditions according to AWPC. Results confirm this novel concept. When veneer based composites using veneer thickness of 3.2 mm or more it was found that at equal loadings, formulations with bigger particle size would protect better the external veneer of the product. This is illustrated in the following table.

**Table 3**

| Mass Loss (%w/w) due to termite attack on plywood treated with bifenthrin | | | | |
|---|---|---|---|---|
| ***Treatment*** | | ***Mass loss % w*/*w due to termite attack according to bifenthrin particle size*** | | ***Significant differences*** |
| ***G of bifenthrin in glue line perm3* of *product*** | ***Face veneer glm³ of face veneer*** | ***0.1*** µ***M*** | ***1-10*** µ***m*** | |
| 25 | 5 | 3.0 (0.4) | 3.0 (0.4) | No |
| 25 | 0 | 7 (0.3) | 2.4(0.2) | Yes |
| Significant differences | | Yes | NO | |

| | | | | |
|---|---|---|---|---|
| Reference: CSIRO Contract Number FFP 02/337 Report Number 1301; Jim Creffield 2003 Preliminary Data for Bifenthrin Formulation Comparison) | | | | |

To have the same effect as formulations that contain larger bifenthrin particle sizes, formulations with small particle size will require higher loadings to achieve similar results. (Reference: CSIRO Contract Number FFP 02/337 Report Number 1301; Jim Creffield 2003 Preliminary Data for Bifenthrin Formulation Comparison)

Examples of formulation than can be used include micro-emulsions where the size particles are very small and the appearance of the solution is translucent, examples of this are 3 g/L ME formulation (Talstar™ 3 ME); emulsion concentrates where particles sizes are an average 0.1 um in diameter, an example of this is Bistar™ EC 100g/L (2.5% to 24% EC); suspension concentrates where particle size average range normally between 1-10um, an example of this is Bistar™ 80 SC ; flowables formulations and wettable powder (WP) based formulations eg. Talstar™ 10 WP that contains larger particle sizes than suspension concentrates. This invention does not exclude other types of formulation containing bifenthrin or any formulation where bifenthrin is found in combination with other actives.

Bifenthrin is stable at high pH and high temperatures. Phenol formaldehyde resins have a pH above 12. Phenol formaldehyde is the most common resin used for plywood and LVL manufacture. This high pH level degrades most common organic termiticides, bifenthrin is a rare exception. This was confirmed in a study conducted by QFRI where no degradation was observed 24 hours after mixing bifenthrin with PF resins (Queensland Forest Research Institute Report prepared by Michael Kennedy - The Stability of Bifenthrin in Liquid Glues Report 1: Stability in Phenol-Formaldehyde plywood glue 2001). This stability accounts for other types of resins using in the industry named urea-formaldehyde, melamine urea-formaldehyde, polyurethane, acrylics, epoxy and isocyanides resins. Table 4 illustrates representative degradation thresholds or upper limits for bifenthrin and common organic termiticides.

**Table 4**

| PH and temperature degradation limits for several organic termiticides | | |
|---|---|---|
| *Active* | *Temperature* oC | *pH* |
| Permethrin | 140-150 | 7.7 |
| Cypermethrin | 220 | 4-7.7 |
| Deltamethrin | 140-190 | 8 |
| Bifenthrin | 180-240 | 9.2 |

It has been demonstrated, through degradation trials conducted during the commercial manufacturing of plywood and LVL, that when using a formulation containing bifenthrin at particle sizes above 1 µm the degradation observed is less than the one observed in bifenthrin formulations with particle sizes of less than 1um.

Trials have demonstrated that bifenthrin can be dosed into the glue line during the batching of the resin mix or just prior to when the glue mix is used in the glue spreader or in any intermediate area between the batching of the resin mix and the application of the glue into the plies or before the resin is mixed into a usable glue.

An example of how to mix bifenthrin formulation during the glue mix is as follows: (a) Calculate the spread or usage of the glue in the composite product, for example that this is 70kg/m³ of a particular product (b) Calculate the additions required to achieve 25 g/m³ (c) The amount of bifenthrin is calculated by dividing the 25 g against the 70 kg of glue, this results in 0.36 g of bifenthrin per kilogram of glue.

If the formulation used is Bistar™ 80 SC that contains 80 g/L of bifenthrin then 0.36 g of bifenthrin will be contained in 4.5 mL of the formulation.
According to the size of glue batch, for example 2000 Kg, it is required to add 9 L of the formulation into the glue mix.

There are several recipes for glues containing phenol formaldehyde resins. The following is an example to prepare a 1000 kg batch of resin based glue:
615 kg of Phenol formaldehyde resin
119 kg of wheat flour
50 kg of macadamia flour
211.5 L of water
4.5 L of Bistar™ 80 SC

The flour in the glue mixture is an agent added to improve spreadablity.

The bifenthrin formulation can be added to the glue system in several steps of the manufacturing process, examples of this are: (a) Adding it to the resin or one component of the resin. This can be done by the resin supplier or by the end user. (b) Adding during glue batching (c) Adding to the glue transport or supply line before the glue is delivered to the equipment used to spread the glue into the laminates; or (d) Adding straight into the tanks of the equipment used to spread the glue into the plies.

When added protection of the faces is required, pressed products can be treated by spraying the faces before they have cooled down. This is generally not needed when the particle size of the bifenthrin is about 1 um or larger. The warmth in the product will create a hot-cold effect that will draw the applying solution deep into the face. Face treatments can also be applied onto a cold face. In this case we rely on the lathe checks as a pathway for the penetration of the chemical. Despite the fact that the penetration of a chemical when sprayed on cold faces is generally not as good as when spraying on warm faces, this can be improved by increasing the concentration of the chemical, increasing the uptake and wetting more of the faces, or by adding surfactants and chemicals that help the solution penetrate the faces better.

The surface treatment of faces can be done by dipping, rolling, brushing, deluging, misting and spraying. These systems can be installed in different areas of the LVL, plywood or any other mill that produces engineered and reconstituted products either in-line or as a separate and distinct process. This depends of the lay-out of the production line or lines of a given mill.

The invention contemplates products treated with the above processes and actives. Examples of these include, without excluding any other products that are treated in similar manner:
Plywood
Laminated Veneer Lumber (LVL)
Finger jointed products
Oriented stranded boards (SB)
Stranded Boards (SB)
Glue laminated Lumber (Glu-Lam)
Particle boards
Medium Density Boards (MDF)
Solid wood
And any combination of the above

Bifenthrin can be added to glue systems as described in this invention alone or in combination with other additives. Examples of these additives are: fungicides and fire retardants but not excluding other additives.

Among the benefits of using bifenthrin as a glue line additive, in accordance with the teachings of the invention, are:
1. Low rates of usage.
2. Degradation of the bifenthrin due to elevated pH is minimal in a 24-48 hour time frame. This allows dosing the resin in large batches.
3. Degradation of bifenthrin due to the combination of the high pH of the resin and the temperature of the process of manufacture is acceptable. The degradation is less than 50% in a commercial situation.

Similarly bifenthrin can be added to the glue line during the manufacture of engineered wood products that use other resin systems, e.g., melamine urea formaldehyde, urea formaldehyde resins, resorcinol, polyurethanes, isocynates, PVC, acrylics, isocyanates polyethylene and combination or hybrids in between these examples without excluding other resins and glue systems. The benefits are:
1. Very low usage rates are required.
2. There is acceptable degradation due to pH of the resin and temperature of the process.
3. It is easy to dispose of the finished product due to very low or negligible dioxin emissions during burning of waste containing bifenthrin.

While the invention has been described with reference to particular preferred details of implementation, these should not be interpreted as limitations to the scope of the invention as reflected in the claims.

## Claims

1. A glue for controlling pests that attack wood or wood products, the glue comprising: a resin; and bifenthrin, wherein the bifenthrin has a mean particle size of 1 to 10 um.

2. The glue of claim 1, further comprising: one of more agents for improving spreadability.

3. The glue of claim 1, wherein: the concentration of bifenthrin in the glue results in a concentration of about 25 g ac/m³.

4. The glue of claim 1, wherein: the resin is a phenol formaldehyde resin.

5. A method for preserving a wood product comprising the steps of: using a glue to join wood subcomponents of the product; the glue including bifenthrin as an ingredient, wherein: the bifenthrin is contained in the glue as particles having a mean particle size of between 1 and 10 um, wherein the product is plywood and the subcomponents are veneers from which the plywood is constructed.

6. The method of claim 5, wherein: there is no surface application of insecticide or acaracide.

7. The method of claim 5, wherein: the bifenthrin is introduced into the production process by adding a resin to a glue batch, the resin having the bifenthrin in it.

8. The method of claim 5, wherein: the bifenthrin is introduced into the production process by making a batch of glue having the bifenthrin in it, then using the glue.

9. The method of cairn 5, wherein: the bifenthrin is introduced into the production process by making a batch of glue without bifenthrin in it, then adding the bifenthrin to the glue transport prior to applying the glue.

10. The method of claim 5, wherein: the product is any one of the group comprising laminated veneer lumber, finger jointed products, oriented stranded boards, stranded boards, glue laminated lumber, particle boards, or medium density boards.

11. A wood product comprising: wood subcomponents which are joined with a glue; the glue containing bifenthrin, wherein the bifenthrin has a mean particle size of 1 to 10 um, wherein the product is plywood and the subcomponents are veneers from which the plywood is constructed.

12. The wood product of claim 11, wherein: the glue delivers a bifenthrin concentration of about 25 g ac/m³.

13. The wood product of claim 11, wherein: there is no surface application of insecticide or acaracide.

14. The wood product of claim 11, wherein: the product is a plywood having a veneer thickness of 3.2 mm.

15. The wood product of claim 11, wherein: the product is any one of the group comprising laminated veneer lumber, finger jointed products, oriented stranded boards, stranded boards, glue laminated lumber, particle boards, or medium density boards.

## Patentansprüche

1. Leim für die Kontrolle von Schädlingen, die Holz oder Holzprodukte angreifen, wobei der Leim umfaßt:
ein Harz und Bifenthrin, wobei das Bifenthrin eine mittlere Partikelgröße von 1 bis 10 µm aufweist.

2. Leim nach Anspruch 1, der ferner ein oder mehrere Mittel zur Verbesserung des Ausbreitungsvermögens umfaßt.

3. Leim nach Anspruch 1, wobei die Konzentration von Bifenthrin im Leim eine Konzentration von etwa 25 g ac/m³ ergibt.

4. Leim nach Anspruch 1, wobei das Harz ein Phenolformaldehydharz ist.

5. Verfahren zum Konservieren eines Holzproduktes, das die folgenden Schritte aufweist:
Verwenden eines Leims zum Verbinden von Holzteilkomponenten des Produktes, wobei der Leim Bifenthrin als einen Bestandteil enthält, wobei das Bifenthrin im Leim als Partikel mit einer mittleren Partikelgröße von 1 bis 10 µm enthalten ist, wobei das Produkt Sperrholz ist und die Teilkomponenten Furniere sind, aus denen das Sperrholz aufgebaut ist.

6. Verfahren nach Anspruch 5, wobei kein Insektizid oder Akarazid auf die Oberfläche aufgetragen wird.

7. Verfahren nach Anspruch 5, wobei das Bifenthrin in den Produktionsprozeß eingebracht wird, indem der Leimcharge ein Harz zugesetzt wird, wobei das Harz Bifenthrin enthält.

8. Verfahren nach Anspruch 5, wobei das Bifenthrin in den Produktionsprozeß eingebracht wird, indem eine Leimcharge hergestellt wird, die Bifenthrin enthält, und der Leim dann verwendet wird.

9. Verfahren nach Anspruch 5, wobei das Bifenthrin in den Produktionsprozeß eingebracht wird, indem eine Leimcharge erzeugt wird, die kein Bifenthrin enthält, und das Bifenthrin dann dem Leimtransport vor dem Auftragen des Leims zugesetzt wird.

10. Verfahren nach Anspruch 5, wobei das Produkt irgendeines aus der Gruppe ist, die laminiertes Furnierholz, keilgezinkte Produkte, Strukturspanplatten, Faserplatten, mit Leim laminiertes Holz, Spanplatten oder MDF-Platten umfaßt.

11. Holzprodukt, das folgendes aufweist:
Holzteilkomponenten, die mit einem Leim verbunden sind, wobei der Leim Bifenthrin enthält, wobei das Bifenthrin eine mittlere Partikelgröße von 1 bis 10 µm aufweist, wobei das Produkt Sperrholz ist und die Teilkomponenten Furniere sind, aus denen das Sperrholz aufgebaut ist.

12. Holzprodukt nach Anspruch 11, wobei der Leim eine Bifenthrin-Konzentration von etwa 25 g ac/m³ liefert.

13. Holzprodukt nach Anspruch 11, wobei kein Insektizid oder Akarazid auf die Oberfläche aufgetragen wird.

14. Holzprodukt nach Anspruch 11, wobei das Produkt Sperrholz mit einer Furnierdicke von 3,2 mm ist.

15. Holzprodukt nach Anspruch 11, wobei das Produkt irgendeines aus der Gruppe ist, die laminiertes Furnierholz, keilgezinkte Produkte, Strukturspanplatten, Faserplatten, mit Leim laminiertes Holz, Spanplatten oder MDF-Platten umfaßt.

## Revendications

1. Colle pour réguler les parasites qui attaquent le bois ou des produits à base de bois, la colle comprenant : une résine, et de la bifenthrine, où la bifenthrine a une taille de particule moyenne de 1 à 10 µm.

2. Colle selon la revendication 1, comprenant en outre : un ou plusieurs agents pour améliorer la dispersibilité.

3. Colle selon la revendication 1, où : la concentration de bifenthrine dans la colle a pour résultat une concentration d'environ 25 g ac/m³.

4. Colle selon la revendication 1, où : la résine est une résine de phénol formaldéhyde.

5. Procédé de préservation d'un produit à base de bois comprenant les étapes consistant à : utiliser une colle pour relier des composants secondaires du bois du produit ; la colle comprenant de la bifenthrine en tant qu'ingrédient, où : la bifenthrine est contenue dans la colle sous forme de particules ayant une taille de particule moyenne comprise entre 1 et 10 µm, où le produit est du contreplaqué et les composants secondaires sont des placages à partir desquels le contreplaqué est construit.

6. Procédé selon la revendication 5, où : il n'y a pas d'application de surface d'insecticide ou d'acaricide.

7. Procédé selon la revendication 5 où : la bifenthrine est introduite dans le procédé de production par l'addition d'une résine à un lot de colle, la résine ayant incorporé la bifenthrine.

8. Procédé selon la revendication 5 où : la bifenthrine est introduite dans le procédé de production en utilisant un lot de colle ayant incorporé la bifenthrine, en utilisant ensuite la colle.

9. Procédé selon la revendication 5, où : la bifenthrine est introduite dans le procédé de production en préparant un lot de colle sans bifenthrine, en ajoutant ensuite la bifenthrine au transport de colle avant l'application de la colle.

10. Procédé selon la revendication 5, où : le produit est un produit quelconque parmi le groupe comprenant des pièces de bois de placage stratifiées, des produits assemblés par entures multiples, des panneaux de grandes particules orientées, des panneaux orientés, des pièces de bois lamellé-collé, des panneaux de particules, ou des panneaux de fibres à densité moyenne.

11. Produit à base de bois comprenant : des produits secondaires à base de bois qui sont collés avec une colle ; la colle contenant de la bifenthrine, où la bifenthrine à une taille de particule moyenne de 1 à 10 µm, où le produit est un contreplaqué et les composants secondaires sont des placages à partir desquels le contreplaqué est construit.

12. Produit à base de bois selon la revendication 11, où la colle délivre une concentration de bifenthrine d'environ 25 g ac/m³.

13. Produit à base de bois selon la revendication 11, où : il n'y a pas d'application de surface d'insecticide ou d'acaricide.

14. Produit à base de bois selon la revendication 11, où : le produit est un contreplaqué ayant une épaisseur de placage de 3,2 mm.

15. Produit à base de bois selon la revendication 11, où : le produit est un produit quelconque parmi le groupe comprenant des pièces de bois de placage stratifiées, des produits assemblés par entures multiples, des panneaux de grandes particules orientées, des panneaux orientés, des pièces de bois lamellé-collé, des panneaux de particules, ou des panneaux de fibres à densité moyenne.
